(19) Europäisches Patentamt
European Patent Office
Office européen des brevets

(11) **EP 1 603 219 B1**

(12) **EUROPÄISCHE PATENTSCHRIFT**

(45) Veröffentlichungstag und Bekanntmachung des Hinweises auf die Patenterteilung:
**18.12.2013 Patentblatt 2013/51**

(21) Anmeldenummer: **05008261.9**

(22) Anmeldetag: **15.04.2005**

(51) Int Cl.:
*H02M 1/42* (2007.01)     *H02M 1/00* (2007.01)

(54) **Verfahren und Schaltung zur Leistungsfaktorkorrektur (PFC)**

Method and device for power factor correction

Procédé et dispositif pour la correction du facteur de puissance

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **25.05.2004 DE 102004025597**

(43) Veröffentlichungstag der Anmeldung:
**07.12.2005 Patentblatt 2005/49**

(73) Patentinhaber: **Tridonic GmbH & Co KG
6851 Dornbirn (AT)**

(72) Erfinder:
• **Marent, Günter
6780 Bartholomäberg (AT)**
• **Zudrell-Koch, Stefan
6850 Dornbirn (AT)**

(74) Vertreter: **Rupp, Christian
Mitscherlich & Partner
Patent- und Rechtsanwälte
Sonnenstrasse 33
80331 München (DE)**

(56) Entgegenhaltungen:
**EP-A2- 1 018 798     WO-A-03/058797
US-B1- 6 304 465**

EP 1 603 219 B1

**Beschreibung**

Die vorliegende Erfindung bezieht sich auf ein Verfahren sowie eine Vorrichtung zur Leistungsfaktorkorrektur (PFC, Power Factor Correction).

Das technische Gebiet der vorliegenden Erfindung ist insbesondere das der Leistungsfaktorkorrektur bei Wechselspannungs-/Gleichspannungs-Leistungswandler.

Leistungsfaktorkorrektur beeinflusst die Art, wie elektrische Geräte Strom dem Stromnetz entnehmen. Die Netzwechselspannung weist bekanntlich einen sinusförmigen Zeitverlauf auf. Idealerweise sollte daher auch der vom Netz entnommene Strom ebenfalls einen sinusförmigen Zeitverlauf aufweisen. Dieser Idealfall kommt aber nicht immer vor, vielmehr kann der Strom sogar erheblich von einer Sinus-Hüllkurve abweichen. Falls der entnommene Strom nicht sinusförmig ist, werden indessen Oberwellen im Netzstrom erzeugt. Diese Oberwellenströme im Versorgungsnetz sollen mit Hilfe einer Leistungsfaktorkorrektur-Schaltung verringert werden.

Um einen sinusförmigen und sich in Phase zur Netzwechselspannung befindenden Eingangsstrom zu erreichen, ist aus dem Stand der Technik die Benutzung einer eine Aufwärtswandler-Topologie aufweisenden aktiven Leistungsfaktorkorrektur vorgeschlagen worden.

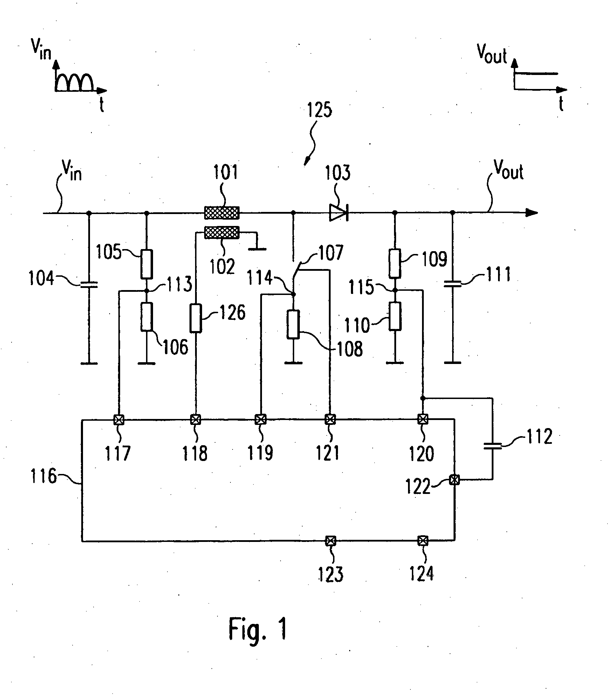

In Fig. 1 ist eine derartige bekannte Leistungsfaktorkorrektur-Schaltung 125 gezeigt, die auf einer Aufwärtswandler-Topologie basiert. Ein Glättungskondensator 104 filtert dabei eine gleichgerichtete Eingangs-Wechselspannung, die mittels eines Spannungsteilers 105, 106 gemessen wird. Die Eingangs-Wechselspannung wird einer Induktivität 101 zugeführt, wobei eine Sekundärwicklung 102 die Nulldurchgänge des Stroms durch die Induktivität 101 feststellt. Weiterhin ermöglicht ein Strommesswiderstand (Shunt) 108 in der Source-Leitung eines Transistors 107 die Erfassung des Induktivitäts-Spitzenstroms, um einen evtl. Überstromzustand feststellen zu können. Parallel zu einem Ausgangskondensator 111 ist ein zweiter Spannungsteiler 109, 110 angeordnet, um die Ausgangs-Gleichspannung zu messen und einen Überspannungszustand bspw. aufgrund von Lastsprüngen festzustellen.

Die genannten vier Messungen, die in der Leistungsfaktorkorrektur-Schaltung 125 stattfinden, werden mittels vier Messeingänge 117, 118, 119, 120 einer Steuerschaltung 116 durchgeführt. Die Steuerschaltung 116 weist zusätzlich einen Ausgang 121 auf, über den der Schalter 107 gesteuert wird. Somit werden an der integrierten Schaltung insgesamt fünf Pins allein für die Leistungsfaktor-Korrektur belegt.

Eine in der Druckschrift DE-10032846A1 offenbarte weiterentwickelte Leistungsfaktorkorrektur-Schaltung 216 ist in Fig. 2 dargestellt. Eine Sekundärwicklung 202 der Induktivität stellt die Nulldurchgänge des Stroms durch eine Induktivität 201 fest. Ein Spannungsteiler 206, 207 wird zur Messung der Ausgangs-Gleichspannung benutzt.

Diese zwei Messungen - Nulldurchgänge des Induktivitäts-Stroms und Ausgangs-Gleichspannung - werden von einer Steuerschaltung 210 durchgeführt. Zur Steuerung eines Schalters 205 weist die Steuerschaltung 210 einen Ausgang 213 auf. Zwei weitere Eingänge 214, 215 dienen zu der Versorgung der Steuerschaltung 210.

In dieser Leistungsfaktorkorrektur-Schaltung 216 speist die gleichgerichtete Eingangs-Wechselspannung eine Induktivität 201. Die Induktivität 201 wird mittels eines Schalters 205 wahlweise geladen beziehungsweise entladen. Die Einschalt-Zeitdauer des Schalters 205 und damit die Ladezeit der Induktivität 201 wird dabei auf Grundlage eines Vergleichs der Ausgangs-Gleichspannung mit einer festen Bezugsspannung gesteuert. Der Schalter 205 wird ausgeschaltet, um die Induktivität 201 zu entladen, bis der Strom durch die Induktivität 201 auf Null abgesunken ist.

Aus dem Stand der Technik ist auch bekannt, auf eine Messung der Eingangs-Wechselspannung zur Erreichung eines sinusförmigen und in Phase zur Eingangs-Wechselspannung Eingangsstroms zu verzichten. Dies beruht auf der Funktionsweise der Leistungsfaktorkorrektur-Schaltung 216 und der Tatsache, dass der Schalter 205 mit einer wesentlich höheren Frequenz (mindestens 10 kHz) ein- und ausgeschaltet wird, als die Frequenz der Netzspannung (typischerweise 50 Hz) und daher als die Frequenz der Eingangs-Gleichspannung (typischerweise 100 Hz). Dementsprechend folgt die Hüllkurve des Stroms durch die Induktivität 201, der dem Eingangsstrom entspricht, von Natur aus der Eingangs-Wechselspannung.

Aus 6,304,465 B1 ist weiter ein Leistungsfaktorregler bekannt, der eine mit einem Ausgang einer Gleichstromquelle verbundene Spule zum Gleichrichten einer Wechselspannung aufweist. Weiter weist der Leistungsfaktorregler eine Kapazität zum Laden eines von der Gleichstromquelle durch die Spule gelieferten Stroms und eine einen Rückfluss verhindernde Diode sowie ein Schaltelement auf, das mit einem Verbindungspunkt der Spule und der Rückfluss verhindernden Diode verbunden und parallel zu der Gleichstromquelle geschaltet ist. Ein Mikrocomputer ist zum Erkennen eines Nulldurchgangs der in der Spule erzeugten magnetischen Feldenergie oder des Stroms, der durch die Spule fließt, und zum Schalten des Schaltelements in einen leitenden Zustand in Antwort auf die erkannten Nulldurchgänge bereitgestellt.

Ausgangspunkt und Aufgabe für die vorliegende Erfindung ist es, eine aktive Leistungsfaktorkorrektur mit verringertem Aufwand zu schaffen. Dies bedeutet insbesondere, dass zur Gewährleistung der Leistungsfaktorkorrektur eine möglichst geringe Anzahl von Messungen durchgeführt werden soll, so dass bspw. die Anzahl der an einer integrierten Schaltung belegten Pins verringert werde kann.

Außerdem soll auch eine neue Art der Ermittlung eines Nulldurchgangs des Eingangsstroms angegeben werden.

Die Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Zentraler Punkt der Erfindung ist, dass ein einziger Messpunkt genügt, um eine aktive Leistungsfaktorkorrektur zu erhalten.

Gleichzeitig kann gemäss der vorliegenden Erfindung auch eine Leistungsfaktorkorrektur-Schaltung, die lediglich einen einzigen Messpunkt aufweist, vor Überströmen geschützt werden.

Gemäss einem ersten Aspekt der vorliegenden Erfindung ist ein Verfahren zur Leistungsfaktorkorrektur in einem Wechselspannungs- / Gleichspannungs-Leistungswandler vorgesehen. In diesem Verfahren speist eine gleichgerichtete Eingangs-Wechselspannung eine Induktivität, die mittels eines Schalters wahlweise geladen beziehungsweise entladen wird. Die Einschalt-Zeitdauer des Schalters und damit die Ladezeit der Induktivität wird auf Grundlage eines Vergleichs einer Ausgangs-Gleichspannung mit einer festen Bezugsspannung gesteuert. Der Schalter wird weiterhin ausgeschaltet, um die Induktivität zu entladen, bis der Strom durch die Induktivität auf Null abgesunken ist. Erfindungsgemäß wird während der Ausschalt-Zeitdauer des Schalters ein Signal an einem Messpunkt dazu verwendet, die Ausgangs-Gleichspannung sowie den Nulldurchgang des Stroms durch die Induktivität herzuleiten.

Dabei kann sich der Messpunkt beispielsweise an einem parallel zum Schalter eingebauten Spannungsteiler befinden.

Die maximale Einschalt-Zeitdauer des Schalters kann anhand des maximal zulässigen Induktivitäts-Stroms und der Eingangs-Wechselspannung berechnet werden.

Hierfür kann die aktuelle Eingangs-Wechselspannung berechnet werden.

Die aktuelle Eingangs-Wechselspannung kann beispielsweise auf Basis der Ausgangs-Gleichspannung, der Einschalt-Zeitdauer, und der Zeitdauer, in der der durch die Induktivität 301 fließende Strom nach dem Öffnen des Schalters auf Null abfällt, berechnet werden.

Gemäss einem weiteren Aspekt der vorliegenden Erfindung ist ein Verfahren zur Leistungsfaktorkorrektur in einem Wechselspannungs- / Gleichspannungs-Leistungswandler vorgesehen, wobei der Nulldurchgang des Induktivitäts-Stroms durch die Erfassung der Schalter-Spannung hergeleitet wird.

Gemäss einem noch weiteren Aspekt der vorliegenden Erfindung ist eine Leistungsfaktorkorrektur-Schaltung für einen Wechselspannungs- / Gleichspannungs-Leistungswandler vorgesehen. Die Leistungsfaktorkorrektur-Schaltung weist eine mit einer gleichgerichtete Eingangs-Wechselspannung versorgte Induktivität auf. Ein Schalter ist zur Steuerung des Ladens bzw. Entladens der Induktivität vorgesehen. Weiterhin ist eine Steuerschaltung zur Ansteuerung des Schalters vorgesehen, wobei die Steuerschaltung den Schalter ausschaltet, bis der Strom durch die Induktivität auf Null abgesunken ist. Erfindungsgemäß weist die Leistungsfaktorkorrektur-Schaltung einen mit der Steuerschaltung verbundenen Messpunkt auf, der während der Ausschalt-Zeitdauer des Schalters sowohl zur Ermittlung der Ausgangs-Gleichspannung als auch des Nulldurchgangs des Stroms durch die Induktivität dient.

Gemäss einem weiteren Aspekt der vorliegenden Erfindung ist eine Leistungsfaktorkorrektur-Schaltung für einen Wechselspannungs- / Gleichspannungs-Leistungswandler vorgesehen, wobei die Steuerschaltung nur einen einzigen Messeingang aufweist, der an einen parallel zum Schalter eingebauten Spannungsteiler angeschlossen ist.

Gemäss einem noch weiteren Aspekt der vorliegenden Erfindung ist eine Leistungsfaktorkorrektur-Schaltung für einen Wechselspannungs- / Gleichspannungs-Leistungswandler vorgesehen, wobei die Steuerschaltung den Nulldurchgang des Induktivitäts-Stroms durch die Erfassung der Schalter-Spannung herleitet.

Dabei kann die Spannungsversorgung der Steuerschaltung zumindest teilweise über den Messeingang erfolgen.

Ausführungsbeispiele der Erfindung werden im folgenden anhand der Zeichnungen näher erläutert.

Fig. 1 zeigt eine aus dem Stand der Technik bekannte Leistungsfaktorkorrektur-Schaltung für einen Wechselspannungs- / Gleichspannungs-Leistungswandler,

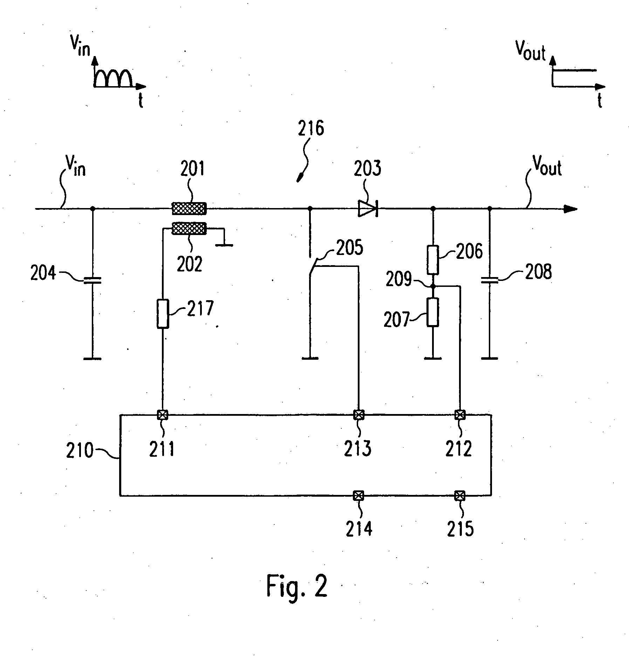

Fig. 2 zeigt eine weitere bekannte Leistungsfaktorkorrektur-Schaltung für einen Wechselspannungs- / Gleichspannungs-Leistungswandler,

Fig. 3 zeigt eine Leistungsfaktorkorrektur-Schaltung für einen Wechselspannungs- / Gleichspannungs-Leistungswandler gemäss einer Ausführungsform der vorliegenden Erfindung, und

Fig. 4 ist ein Zeitdiagramm für die Leistungsfaktorkorrektur-Schaltung nach Fig. 3.

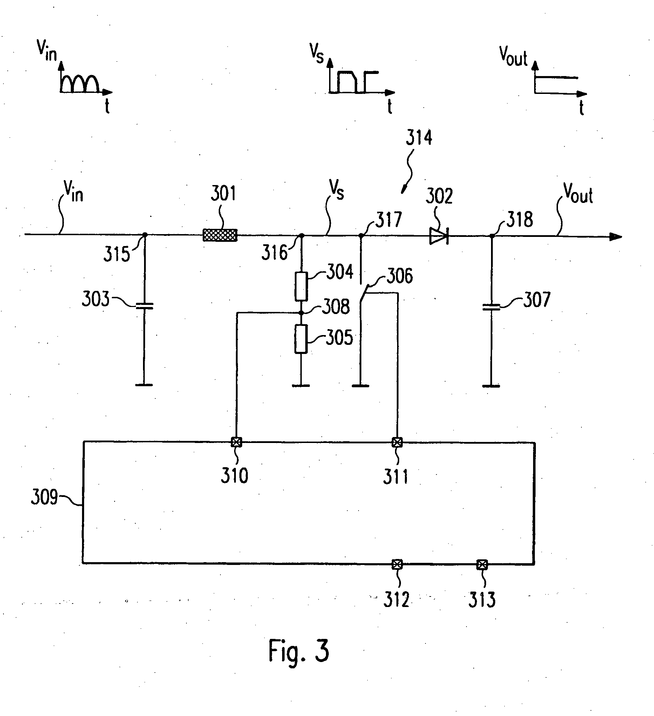

In Fig. 3 ist eine Ausführungsform einer Leistungsfaktorkorrektur-Schaltung 314 gemäss der vorliegenden Erfindung gezeigt.

Die Eingangs-Wechselspannung $V_{in}$ wird von einem Glättungskondensator 303 gesiebt und einer Induktivität 301, i.e. einer Spule, zugeführt. Die Induktivität 301 ist vor einer Diode 302 zwischen einem Eingangsanschluss 315 und einem Ausgangsanschluss 318 in Serie geschaltet. An dem Eingangsanschluss 315 liegt die Eingangs-Wechselspannung $V_{in}$ an, während an dem Ausgangsanschluss 318 die Ausgangs-Gleichspannung $V_{out}$ bereitgestellt wird. Ein Ausgangs-Gleichspannungskondensator 307 verbindet den Ausgangsanschluss 318 mit Masse. An die Verbindung 317 zwischen der Induktivität 301 und der Diode 302 ist ein steuerbarer Schalter 306 angeschlossen.

Wenn der Schalter 306 eingeschaltet ist, ist die Induktivität 301 gegen Masse kurzgeschlossen und die Diode 302 gesperrt. Die Induktivität 301 lädt sich dann auf und Energie wird dadurch in der Induktivität 301 gespeichert.

Wenn der Schalter 306 hingegen ausgeschaltet ist, ist die Diode 302 leitend. Die Induktivität 301 entlädt sich dann über die Diode 302 in den Ausgangs-Gleichspannungskondensator 307. Die Energie wird dadurch an den Ausgangs-Gleichspannungskondensator 307 übertragen.

Der Schalter 306 wird von einer Steuerschaltung 309 angesteuert. Zu diesem Zweck weist die Steuerschaltung 309 einen Ausgang 311 auf, über den dem Schalter 306 ein Steuersignal zugeführt wird. Die Frequenz des Steuersignals (typischerweise mindestens 10 kHz) und daher des Ein- und Ausschaltens des Schalters 306 ist wesentlich höher als die Frequenz der Netzspannung (typischerweise 50 Hz) und der gleichgerichteten Eingang-Wechselspannung (typischerweise 100 Hz).

Zur Bestimmung der Einschalt-Zeitdauer bzw. der Ausschalt-Zeitdauer des Schalters 306 benötigt die Steuerschaltung 309 Informationen über die Ausgangs-Gleichspannung bzw. über den Nulldurchgang des Stroms durch die Induktivität 301. Dies deshalb, da die Einschalt-Zeitdauer des Schalters 306 und damit die Ladezeit der Induktivität 301 auf Grundlage eines Vergleichs der Ausgangs-Gleichspannung mit einer festen Bezugsspannung gesteuert wird und auf Grundlage der Vorgabe, dass die Steuerschaltung 309 den Schalter 306 solange ausschaltet, bis der Strom durch die Induktivität 301 auf Null abgesunken ist.

Um diese Informationen zu ermitteln, wird wie in Fig. 3 gezeigt gemäss der vorliegenden Erfindung lediglich ein einziger Messpunkt 308 benötigt. Der Messpunkt 308 befindet sich an einem parallel zum Schalter 306 angeordneten Spannungsteiler 304, 305. Der Messpunkt 308 ist an einen Messeingang 310 der Steuerschaltung 309 angeschlossen, so dass der Steuerschaltung 309 ein entsprechendes Messsignal zugeführt werden kann.

Bei ausgeschaltetem Schalter 306 wird mittels des Messpunkts 308 die Ausgangs-Gleichspannung gemessen. Die Steuerschaltung 309 kann mit dieser Information die nächste Einschalt-Zeitdauer des Schalters 306 bestimmen und zwar auf Grundlage eines Vergleichs der gemessenen Ausgangs-Gleichspannung mit einer festen Referenzspannung.

Dieser Vergleich kann beispielsweise mittels eines Kondensators durchgeführt werden. Ab dem EinschaltZeitpunkt des Schalters 306 wird der Kondensator über eine Stromquelle aufgeladen. Daraus ergibt sich eine ansteigende Kondensator-Spannung. Sobald diese Kondensator-Spannung die gemessene Ausgangs-Gleichspannung erreicht, wird der Schalter 306 abgeschaltet und der Kondensator entladen.

Im übrigen kann die Zahl der benötigten Pins weiter verringert werden, wenn der Messpunkt darüber hinaus auch die Funktion der Spannungsversorgung der integrierten Schaltung übernimmt.

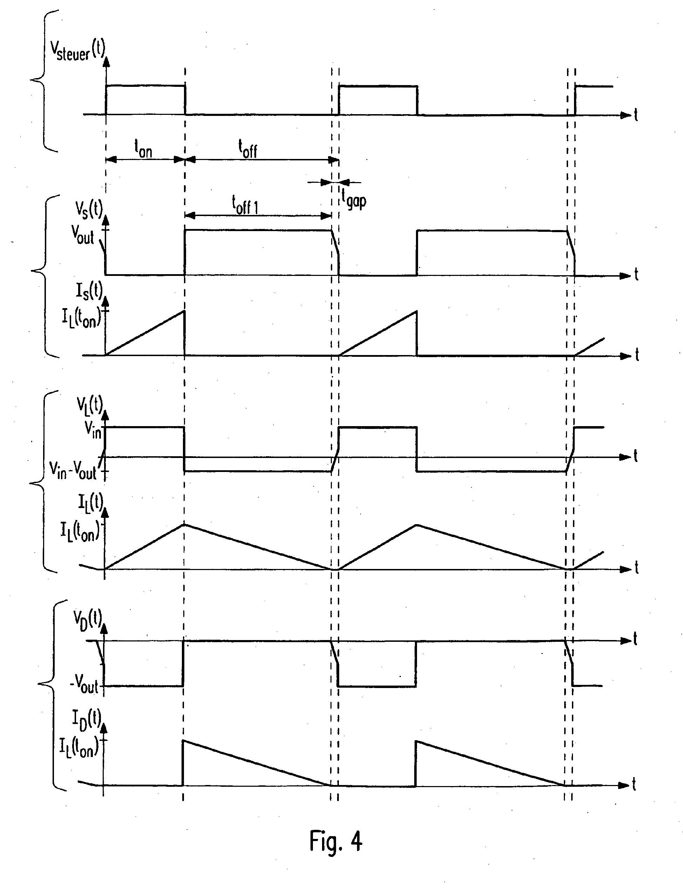

In Fig. 4 ist ein Zeitdiagramm für die Leistungsfaktorkorrektur-Schaltung 314 nach Fig. 3 gezeigt.

Das Zeitverhalten verschiedener Spannungen und Ströme wird darin betrachtet, nämlich:

- der Steuersignal-Spannung $V_{steuer}$ des Ausgangs 311 der Steuerschaltung 309,
- der Spannung $V_S$ und des Stroms $I_s$ des Schalters 306,
- der Spannung $V_L$ und des Stroms $I_L$ der Induktivität 301, und
- der Spannung $V_D$ und des Stroms $I_D$ der Diode 302.

Während der Einschalt-Zeitdauer $t_{on}$ des Schalters 306 steigt der Strom $I_L$ durch die Induktivität 301 linear an.

Wird nach der Zeitdauer $t_{on}$ der Schalter 306 ausgeschaltet, nimmt die Spannung $V_S$ des Schalters 306 den Wert der Ausgangs-Gleichspannung $V_{out}$ an. Außerdem sinkt der Strom $I_L$ durch die Induktivität 301 ab dem Zeitpunkt des Ausschaltens des Schalters 306 wieder linear ab.

Wenn sich der Strom $I_L$ durch die Induktivität 301 auf Null entladen hat, ist der Strom $I_D$ durch die Diode 302 ebenfalls gleich Null. Ab diesem Zeitpunkt sinken die Spannung $V_D$ der Diode 302 und die Spannung $V_S$ des Schalters 306.

Mittels des Messpunkts 308 misst die Steuerschaltung 309 die Spannung $V_S$ des Schalters 306. Die Steuerschaltung 309 kann daher das Absinken der Spannung $V_S$ und dessen Ursache, nämlich den Nulldurchgang des Stroms durch die Induktivität 301, erfassen. Unmittelbar darauf schaltet die Steuerschaltung 309 den Schalter 306 ein. Die Zeitdauer $t_{gap}$ zwischen dem Nulldurchgang des Induktivitäts 301 -Stroms und dem Einschalten des Schalters 306 bleibt klein gegenüber der Ausschaltzeitdauer $t_{off}$ des Schalters 306.

Die Leistungsfaktorkorrektur-Schaltung 314 soll auch vor einem Über-Eingangsstrom geschützt werden. Hierzu wird der maximale Wert des Stroms durch die Induktivität 301 begrenzt. Diese Begrenzung wird dadurch gewährleistet, dass die Einschaltzeitdauer $t_{on}$ des Schalters 306 eine maximale Einschaltzeitdauer $t_{on\ max}$ nicht überschreitet.

Die Induktivitäts-Spannung wird durch folgende Gleichung definiert:

$$V_L = L \cdot \frac{\partial I_L(t)}{\partial t} \quad \text{(Gleichung 1)}$$

wobei L der Induktivitätsfaktor der Induktivität 301 ist.

Beim Lösen dieser Gleichung ergibt sich für die maximale Einschalt-Zeitdauer $t_{on\,max}$:

$$t_{on\,max} = L \cdot \frac{I_{max}}{V_{in}} \quad \text{(Gleichung 2)}$$

wobei der maximale Eingangsstrom $I_{max}$ dem vorgegebenen maximal zulässigen Induktivitäts-Strom entspricht.

Um den aktuellen Wert der Eingangs-Wechselspannung $V_{in}$ zu berechnen, wird Gleichung 1 benutzt. Es wird angenommen, dass der Schalter 306 zum Zeitpunkt t=0 eingeschaltet wird. Der Schalter 306 wird dann wieder zum Zeitpunkt t=$t_{on}$ ausgeschaltet. Ab dem Zeitpunkt t=$t_{on}$ sinkt der Induktivitäts-Strom linear und erreicht den Wert Null zum Zeitpunkt t=$t_{on}$+$t_{off1}$, wobei $t_{off1}$=$t_{off}$-$t_{gap}$. Nach Integrieren der Gleichung 1 ergibt sich systembedingt:

$$V_{in} = L \cdot \frac{I_L(t_{on})}{t_{on}} \quad \text{(Gleichung 3)}$$

$$V_{in} - V_{out} = L \cdot \frac{-I_L(t_{on})}{t_{off1}} \quad \text{(Gleichung 4)}$$

Daraus folgt folgende Beziehung zwischen der Eingangs-Wechselspannung und der Ausgangs-Gleichspannung:

$$V_{in} = V_{out} \cdot \frac{t_{off1}}{t_{on} + t_{off1}} \quad \text{(Gleichung 5)}$$

Nach Gleichung 5 berechnet die Steuerschaltung 309 den aktuellen Wert der Eingangs-Wechselspannung $V_{in}$ auf Basis der letzten gemessenen Ausgangs-Gleichspannung $V_{out}$, der letzten gemessenen Einschalt-Zeitdauer $t_{on}$, und der letzten gemessenen Zeitdauer $t_{off1}$.

**Patentansprüche**

**1.** Verfahren zur Leistungsfaktorkorrektur in einem Wechselspannungs- / Gleichspannungs-Leistungswandler, wobei eine gleichgerichtete Eingangs-Wechselspannung eine Induktivität (301) speist,
die Induktivität (301) mittels eines Schalters (306) wahlweise geladen beziehungsweise entladen wird, die Einschalt-Zeitdauer des Schalters (306) und damit die Ladezeit der Induktivität (301) auf Grundlage eines Vergleichs einer Ausgangs-Gleichspannung mit einer festen Bezugsspannung gesteuert wird, und
der Schalter (306) ausgeschaltet wird, um die Induktivität (301) zu entladen, bis der Strom durch die Induktivität (301) auf Null abgesunken ist, **dadurch gekennzeichnet,**
**dass** während der Ausschalt-Zeitdauer des Schalters (306), ein Signal an einem Messpunkt (308) dazu verwendet wird, sowohl die Ausgangs-Gleichspannung als auch den Nulldurchgang des Stroms durch die Induktivität (301) herzuleiten.

**2.** Verfahren nach Anspruch 1,
**dadurch gekennzeichnet,**

**dass** der Messpunkt (308) an einen parallel zum Schalter (306) eingebauten Spannungsteiler (304, 305) angeschlossen ist.

3. Verfahren nach einem der Ansprüche 1 bis 2,
   **dadurch gekennzeichnet,**
   **dass** die maximale Einschalt-Zeitdauer des Schalters (306) anhand des maximal zulässigen Induktivitäts (301) -Stroms und der Eingangs-Wechselspannung berechnet wird.

4. Verfahren nach einem der vorhergehenden Ansprüche,
   **dadurch gekennzeichnet,**
   **dass** die aktuelle Eingangs-Wechselspannung berechnet wird.

5. Verfahren nach Anspruch 4,
   **dadurch gekennzeichnet,**
   **dass** die aktuelle Eingangs-Wechselspannung auf Basis der Ausgangs-Gleichspannung, der Einschalt-Zeitdauer, und der Zeitdauer, in der der durch die Induktivität (301) fliessende Strom nach dem Öffnen des Schalters auf Null abfällt, berechnet wird.

6. Integrierte Schaltung,
   **dadurch gekennzeichnet,**
   **dass** sie zur Durchführung eines Verfahren nach einem der vorhergehenden Ansprüche ausgelegt ist.

7. Leistungsfaktorkorrektur-Schaltung für einen Wechselspannungs- / Gleichspannungs-Leistungswandler, aufweisend:

   eine mit einer gleichgerichtete Eingangs-Wechselspannung versorgte Induktivität (301), einen Schalter (306) zur Steuerung des Ladens bzw. Entladens der Induktivität (301), und eine Steuerschaltung (309) zur Ansteuerung des Schalters (306), wobei die Steuerschaltung (309) den Schalter (306) ausschaltet, bis der Strom durch die Induktivität (301) auf Null abgesunken ist,

   **gekennzeichnet durch**
   einen mit der Steuerschaltung (309) verbundenen Messpunkt (308), der für die Ermittlung sowohl der Ausgangs-Gleichspannung wie auch des Nulldurchgangs des Stroms **durch** die Induktivität (301) dient.

8. Leistungsfaktorkorrektur-Schaltung nach Anspruch 7,
   **dadurch gekennzeichnet,**
   **dass** der Messpunkt (308) an einen parallel zum Schalter (306) eingebauten Spannungsteiler (304, 305) angeschlossen ist.

9. Leistungsfaktorkorrektur-Schaltung nach Anspruch 7 oder 8,
   **dadurch gekennzeichnet,**
   **dass** die Steuerschaltung (309) die maximale Einschalt-Zeitdauer des Schalters (306) anhand des maximal zulässigen Induktivitäts (301) -Strom und der Eingangs-Wechselspannung berechnet.

10. Leistungsfaktorkorrektur-Schaltung nach einem der Ansprüche 7 bis 9,
    **dadurch gekennzeichnet,**
    **dass** die Steuerschaltung (309) die aktuelle Eingangs-Wechselspannung berechnet.

11. Leistungsfaktorkorrektur-Schaltung Anspruch 10,
    **dadurch gekennzeichnet,**
    **dass** die Steuerschaltung (309) die aktuelle Eingangs-Wechselspannung auf Basis der Ausgangs-Gleichspannung, der Einschalt-Zeitdauer, und der Zeitdauer, in der der durch die Induktivität (301) fliessende Strom nach dem Öffnen des Schalters auf Null abfällt, berechnet.

12. Leistungsfaktorkorrektur-Schaltung nach einem der Ansprüche 7 bis 11,
    wobei die Steuerschaltung (309) nur einen einzigen Messeingang (310) aufweist, der an einen parallel zum Schalter (306) eingebauten Spannungsteiler (304, 305) angeschlossen ist.

**13.** Betriebsgerät für Lampen, aufweisend eine Leistungsfaktorkorrektur-Schaltung nach einem der Ansprüche 7 bis 12.

**14.** Elektronisches Vorschaltgerät für Gasentladunglampen, aufweisend eine Leistungsfaktorkorrektur-Schaltung nach einem der Ansprüche 7 bis 12.

**Claims**

**1.** Method for power factor correction in an AC voltage/DC voltage power converter,
a rectified input AC voltage feeding an inductance (301),
the inductance (301) being either charged or discharged using a switch (306),
the switched-on time duration of the switch (306) and thus the charging time of the inductance (301) being controlled on the basis of a comparison of an output DC voltage with a fixed reference voltage, and
the switch (306) being switched off in order to discharge the inductance (301) until the current through the inductance (301) has fallen to zero,
**characterized**
**in that** a signal at a measuring point (308) is used to derive both the output DC voltage and the zero crossing of the current through the inductance (301) during the switched-off time duration of the switch (306).

**2.** Method according to Claim 1,
**characterized**
**in that** the measuring point (308) is connected to a voltage divider (304, 305) installed parallel to the switch (306).

**3.** Method according to either of Claims 1 and 2,
**characterized**
**in that** the maximum switched-on time duration of the switch (306) is calculated using the maximum permissible inductance (301) current and the input AC voltage.

**4.** Method according to one of the preceding claims, **characterized**
**in that** the instantaneous input AC voltage is calculated.

**5.** Method according to Claim 4,
**characterized**
**in that** the instantaneous input AC voltage is calculated on the basis of the output DC voltage,
the switched-on time duration and the time duration in which the current flowing through the inductance (301) falls to zero after the switch has been opened.

**6.** Integrated circuit,
**characterized**
**in that** it is designed to carry out a method according to one of the preceding claims.

**7.** Power factor correction circuit for an AC voltage/DC voltage power converter, having:

an inductance (301) supplied with a rectified input AC voltage,
a switch (306) for controlling the charging and discharging of the inductance (301), and
a control circuit (309) for controlling the switch (306), the control circuit (309) switching off the switch (306) until the current through the inductance (301) has fallen to zero,

**characterized by**
a measuring point (308) which is connected to the control circuit (309) and is used to determine both the output DC voltage and the zero crossing of the current through the inductance (301).

**8.** Power factor correction circuit according to Claim 7,
**characterized**
**in that** the measuring point (308) is connected to a voltage divider (304, 305) installed parallel to the switch (306).

**9.** Power factor correction circuit according to Claim 7 or 8,
**characterized**

**in that** the control circuit (309) calculates the maximum switched-on time duration of the switch (306) using the maximum permissible inductance (301) current and the input AC voltage.

10. Power factor correction circuit according to one of Claims 7 to 9,
    **characterized**
    **in that** the control circuit (309) calculates the instantaneous input AC voltage.

11. Power factor correction circuit according to Claim 10,
    **characterized**
    **in that** the control circuit (309) calculates the instantaneous input AC voltage on the basis of the output DC voltage, the switched-on time duration and the time duration in which the current flowing through the inductance (301) falls to zero after the switch has been opened.

12. Power factor correction circuit according to one of Claims 7 to 11,
    the control circuit (309) having only a single measuring input (310) which is connected to a voltage divider (304, 305) installed parallel to the switch (306).

13. Operating device for lamps,
    having a power factor correction circuit according to one of Claims 7 to 12.

14. Electronic ballast for gas discharge lamps, having a power factor correction circuit according to one of Claims 7 to 12.


**Revendications**

1. Procédé pour une correction du facteur de puissance dans un convertisseur de puissance tension alternative/tension continue, dans lequel
   une tension alternative d'entrée redressée alimente une inductance (301),
   l'inductance (301) est alternativement chargée ou déchargée au moyen d'un commutateur (306),
   la durée de mise en circuit du commutateur (306) et de ce fait le temps de charge de l'inductance (301) est commandée sur la base d'une comparaison d'une tension continue de sortie avec une tension de référence fixe, et
   le commutateur (306) est mis hors circuit, pour décharger l'inductance (301), jusqu'à ce que le courant à travers l'inductance (301) tombe à zéro,
   **caractérisé en ce que**
   pendant la durée de mise hors circuit du commutateur (306), un signal en un point de mesure (308) est utilisé pour déduire à la fois la tension continue de sortie et le passage par zéro du courant à travers l'inductance (301).

2. Procédé selon la revendication 1,
   **caractérisé en ce que**
   le point de mesure (308) est raccordé à un diviseur de tension (304, 305) monté en parallèle du commutateur (306).

3. Procédé selon l'une des revendications 1 à 2,
   **caractérisé en ce que**
   la durée maximale de mise en circuit du commutateur (306) est calculée sur la base du courant d'inductance (301) maximal admissible et de la tension alternative d'entrée.

4. Procédé selon l'une des revendications précédentes,
   **caractérisé en ce que**
   la tension alternative d'entrée actuelle est calculée.

5. Procédé selon la revendication 4,
   **caractérisé en ce que**
   la tension alternative d'entrée actuelle est calculée sur la base de la tension continue de sortie, de la durée de mise en circuit, et de la durée durant laquelle le courant circulant à travers l'inductance (301) tombe à zéro après l'ouverture du commutateur.

6. Circuit intégré
   **caractérisé en ce qu'**il est conçu pour mettre en oeuvre un procédé selon l'une quelconque des revendications précédentes.

7. Circuit de correction de facteur de puissance pour un convertisseur de puissance tension alternative/tension continue, présentant :

une inductance (301) alimentée par une tension alternative d'entrée redressée,
un commutateur (306) destiné à commander la charge ou la décharge de l'inductance (301), et
un circuit de commande (309) destiné à commander le commutateur (306), le circuit de commande (309) mettant le commutateur (306) hors circuit jusqu'à ce que le courant à travers l'inductance (301) tombe à zéro,

**caractérisé par**
un point de mesure (308) relié au circuit de commande (309), le point de mesure (308) servant à déterminer à la fois la tension continue de sortie et le passage par zéro du courant à travers l'inductance (301).

8. Circuit de correction de facteur de puissance selon la revendication 7,
**caractérisé en ce que**
le point de mesure (308) est raccordé à un diviseur de tension (304, 305) monté en parallèle du commutateur (306).

9. Circuit de correction de facteur de puissance selon la revendication 7 ou 8,
**caractérisé en ce que**
le circuit de commande (309) calcule la durée maximale de mise en circuit du commutateur (306) sur la base du courant d'inductance (301) maximal admissible et de la tension alternative d'entrée.

10. Circuit de correction de facteur de puissance selon l'une des revendications 7 à 9,
**caractérisé en ce que**
le circuit de commande (309) calcule la tension alternative d'entrée actuelle.

11. Circuit de correction de facteur de puissance selon la revendication 10,
**caractérisé en ce que**
le circuit de commande (309) calcule la tension alternative d'entrée actuelle sur la base de la tension continue de sortie, de la durée de mise en circuit, et de la durée durant laquelle le courant circulant à travers l'inductance (301) tombe à zéro après l'ouverture du commutateur.

12. Circuit de correction de facteur de puissance selon l'une des revendications 7 à 11, dans lequel le circuit de commande (309) présente une unique entrée de mesure (310), qui est raccordée à un diviseur de tension (304, 305) monté en parallèle du commutateur (306).

13. Circuit d'alimentation pour lampes,
présentant un circuit de correction de facteur de puissance selon l'une des revendications 7 à 12.

14. Ballast électronique pour lampes à décharge de gaz, présentant un circuit de correction de facteur de puissance selon l'une des revendications 7 à 12.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10032846 A1